# EUROPÄISCHE PATENTANMELDUNG

(11) **EP 3 895 567 A1**
(43) Veröffentlichungstag der Anmeldung: **20.10.2021**
(21) Anmeldenummer: 21168406.3
(22) Anmeldetag: 14.04.2021
(51) Int. Cl.: A41D 13/11, A62B 18/02, A62B 23/02, B01D 39/08

(54) **MUND-NASEN-MASKE MIT FILTER**

(30) Priorität: 15.04.2020 DE 202020102056 U
(71) Anmelder: Bierbrodt, Thomas, 45219 Essen (DE)
(72) Erfinder: Bierbrodt, Thomas, 45219 Essen (DE)
(74) Vertreter: Michalski Hüttermann & Partner Patentanwälte mbB

(57) **Zusammenfassung**

Die Erfindung betrifft eine Schutzmaske, insbesondere eine Schutzmaske zur Verhinderung der Verbreitung ansteckender Krankheiten durch Tröpfchen- und auf anderen Wegen übertragbare Infektionen, mit einem mehrlagigen Filter, wobei der mehrlagige Filter vorzugsweise auswechselbar ist.

## Beschreibung

Die Erfindung betrifft eine Schutzmaske, insbesondere eine Schutzmaske zur Verhinderung der Verbreitung ansteckender Krankheiten durch Tröpfchen- und auf anderen Wegen übertragbare Infektionen, mit einem mehrlagigen Filter.

Masken zum Schutz des Gesichts, insbesondere von Augen, Nasen und der damit verbundenen Organe sind für viele berufliche und private Tätigkeiten von großer Wichtigkeit, etwa im Handwerk, Sport, Brand- und Zivilschutz oder beim Militär. Jüngst spielen solche gattungsgemäßen Schutzmasken eine sehr wichtige Rolle bei der Verhinderung der Verbreitung von Pandemien. Dabei gilt es, mittels dieser Masken den Träger und/oder sein Umfeld, d. h. Personen, mit denen der Träger im weitesten Sinne Kontakt hat, möglichst effektiv zu schützen.

Ausgehend von diesem Stand der Technik stellt sich der vorliegenden Erfindung die Aufgabe, eine Schutzmaske zur Verhinderung der Verbreitung ansteckender Krankheiten zu schaffen, die sich durch hohe Wirksamkeit beim Einsatz, die Möglichkeit der mehrmaligen Verwendung, guten Tragkomfort und/oder Austauschbarkeit auszeichnet.

Diese Aufgabe wird erfindungsgemäß durch eine Schutzmaske gemäß Anspruch 1 gelöst. Insbesondere wird dabei erfindungsgemäß vorgesehen, dass das Filter eine Außenlage und ein Filtervlies mit kaskadierenden Lagen aufweist.

Ein derartiges Filter besteht aus mehreren Lagen oder auch Schichten in Form eines ein- oder mehrlagigen Filtervlieses, das an seiner Außenseite über eine Außenlage zusammengehalten und geschützt wird. Von innen wie von außen umgibt also solch eine Außenlage das Filtervlies mit den seinerseits kaskadierenden Lagen. Das Obermaterial der Außenlage ist vorzugsweise atmungsaktiv, robust und verfügt über sehr geringen Atemwiderstand, während das Filtervlies mit kaskadierend angeordneten Filtern in Abstimmung auf den Anwendungsbereich hohen Anforderungen genügt. Dank der Kaskadierung kann eine progressive Filterleistung, in der Höhe entsprechend dem jeweiligen Einsatzgebiet, erzielt werden. Eine Kaskadierung umfasst dabei wenigstens zwei Filterlagen, vorzugsweise mehr als zwei Filterlagen, wie beispielsweise drei oder mehr Filterlagen.

In einer Ausgestaltung der Erfindung kann es vorgesehen sein, dass die Außenlagen bzw. das Material aus der die Außenlage gefertigt ist viruzid, bakterizid und/oder fungizid ausgerüstet ist. Hierzu kann es beispielsweise vorgesehen sein, dass die Außenlage bzw. das Material aus der die Außenlage gefertigt ist mit entsprechenden Eigenschaften aufweisenden Metallen, wie beispielsweise Silber oder Kupfer, beschichtet ist. Hierdurch kann eine durch die Handhabung der Maske begründete Kontaminierung der Außenlage mit Viren, Keimen oder Pilzen verringert oder bestenfalls vermieden werden.

Gemäß einer weiteren Ausgestaltung der Erfindung kann es vorgesehen sein, dass die Außenlage aus einem feuerunempfindlichen oder feuerresistenten Material gebildet ist. Geeignete Materialen sind dabei beispielsweise PTFE und/oder ePTFE Membrane, wie sie beispielsweise unter der Bezeichnung Nomex® Nano oder Nomex® Nano Flex von der Firma DuPont angeboten werden. Das Vorsehen einer Außenlagen aus einem solchen Material bietet insbesondere im Bereich des Feuerwehrdienstes und/oder des Zivilschutzes eine hohe Beständigkeit gegen in Nutzungssituationen auftretende harsche Umgebungsbedingungen, wie beispielsweise Brände und ist resistent gegen Funkenflug.

Eine bevorzugte Ausführungsform der Erfindung sieht vor, dass das Filter als zumindest teilweise Abdeckung für das menschliche Gesicht ausgebildet ist, d. h. es ist in seiner Formgebung konkav, um sich den Konturen des Gesichtes effektiv und sicher anzupassen. Es versteht sich, dass ein solches Filter entsprechend flexibel sein muss, um den beschriebenen Anforderungen zu genügen.

Anders sieht es bei der Ausführungsform der Erfindung aus, bei der die Schutzmaske als Gestell zur Aufnahme eines Filters ausgebildet ist, d. h. solch ein Filter verfügt ebenfalls über eine Außenlage und ein Filtervlies mit kaskadierenden Lagen, wird aber in das Gestell im Bedarfsfall eingesetzt.

Es versteht sich, dass solch ein Gestell vergleichsweise starr ausgebildet und dass das Filter lösbar mit dem Gestell verbunden ist, um es nach dem Gebrauch auswechseln, reinigen oder vernichten zu können. Dabei sind verschiedene lösbare Mechanismen denkbar, etwa das Einschieben, Einrasten oder Eindrehen etc. eines solchen Filters in eine entsprechende gestellseitige Aufnahme.

Besondere Bedeutung im Rahmen der Erfindung kommt den Filtern zu und deren kaskadenartiger Anordnung von grob in Richtung fein, folglich von der Außenseite her betrachtet. Bevorzugt kann es dabei vorgesehen sein, dass die äußere Lage Filtervlies eine Filtergrößenfraktion bzw. einen Abscheidegrad ≥ 45%, insbesondere zwischen 45% und 95%, vorzugsweise zwischen 48% und 93% bei Partikelgrößen > 10 µm aufweist. Dies bedeutet, dass zwischen 45% und 95% der Partikelgrößen pro Filterschicht/Filterlage abgeschieden bzw. von der Filterlage adsorbiert werden. Die Filtergrößenfraktion bzw. der Abscheidegrad kann dabei vorzugsweise in Übereinstimmung mit den Vorschriften der DIN EN 1822-1:2009 ermittelt werden.

Gemäß einer weiteren Ausgestaltung der Erfindung kann es vorgesehen sein, dass wenigstens eine Filterlage progressiv aufgebaut ist, wobei die Dichte der wirrgelegten Fasern zur Reinluftseite hinzunimmt.

Bei einer bevorzugten Variante der Erfindung mit drei Filterlagen sieht dies so aus, dass ein mittleres Filtervlies eine Filtergrößenfraktion ≥ 30%, insbesondere zwischen 30% und 80%, vorzugsweise zwischen 35% und 75% bei Partikelgrößen > 2,5 µm aufweist. Dieses mittlere Filtervlies bewirkt also, dass zwischen 30% und 80% der Partikel > 2,5 µm abgeschieden werden.

Schließlich die innere Vliesschicht. Diese ist insbesondere effektiv, wenn das innere Filtervlies eine Filtergrößenfraktion ≥ 40%, insbesondere zwischen 40% und 90%, vorzugsweise zwischen 50% und 80% bei Partikelgrößen > 1,0 µm aufweist. Diese feinste Schicht ermöglicht also ein Abscheiden von vorzugsweise ≥ 50%, insbesondere zwischen 50% bis 80% bei Partikeln > 1,0 µm.

Gemäß einer weiteren Ausgestaltung der Erfindung kann es vorgesehen sein, dass wenigstens eine Filterlage aus einer Membran bzw. einem Membranmaterial, wie beispielsweise einer PTFE und/oder ePTFE Membran oder aus einer Microfaservlies Mischung aufweisend Meta-Aramid, wie sie beispielsweise unter der Bezeichnung Nomex® Nano oder Nomex® Nano Flex von der Firma DuPont angeboten werden, gebildet ist.

Gemäß einer Ausgestaltung der Erfindung kann es vorgesehen sein, dass zumindest eine Filterlage antibakteriell und/oder viruzid ausgerüstet ist. Hierzu kann es beispielsweise vorgesehen sein, dass ein die Filterlage bildendes Vlies mit entsprechenden Eigenschaften aufweisenden Metallen, wie beispielsweise Silber oder Kupfer, beschichtet ist.

Wenn die Abdeckung (Schutzmaske) eine Zwischenlage umfasst, welche zwischen Filtervlies und Außenlage vorgesehen ist, ist von einem Obermaterial und einer Lage die Rede, die unmittelbar benachbart zu dem Filtervlies in einer Ausgestaltung der erfindungsgemäßen Maske angeordnet ist.

Die erfindungsgemäße Abdeckung bzw. Schutzmaske weist vorzugsweise eine Außenlage aus einem widerstandfähigen Material, insbesondere einem widerstandfähigen Gewebe auf. Unter widerstandsfähig im Sinne der Erfindung ist dabei eine hohe Reiß- und Verschleißfestigkeit des Materials sowie eine gute Waschbarkeit auch bei höheren Temperaturen (Waschtemperatur ≥60°C). Insbesondere weist das widerstandfähige Material eine gute Beständigkeit gegen im Bereich der professionellen Anwendung eingesetzten Desinfektionsmitteln auf, wie sie beispielsweise zur Aufbereitung und Desinfektion von persönlicher Schutzausrüstung nach DIN EN 469 und HUPF zugelassen sind und/oder zur Wäschedesinfektion gemäß § 10 c BSeuchenG eingesetzt werden. Insbesondere ist das erfindungsgemäß für eine Außenlage einsetzbare Material beständig gegen Wasserstoffperoxid, Essigsäure, Peressigsäure und Alkylbenzolsulfonate.

Eine weitere bevorzugte Ausführungsform der Erfindung sieht vor, dass die Außenlage eine Tasche ausbildet. Diese Tasche dient quasi als Aufnahme für das Vlies und die gerade beschriebene Zwischenlage, hält diese für die Maske zentralen Komponenten in Position und gewährleistet einen sicheren Sitz und eine modulare Austauschbarkeit.

In diesem Sinne versteht es sich, dass die Außenlage in etwa doppelt so groß dimensioniert ist wie Zwischenlage und Filtervlies. Fertigungstechnisch kann das die Außenlage bildende Obermaterial um das mehrschichtige Filtervlies und ggf. die Zwischenlage herumgeklappt, sodass sich eine entsprechende Tasche zur Aufnahme sämtlicher Komponenten ausbildet.

Ergänzend hierzu kann vorgesehen sein, dass die Außenlage eine mittige Falzkante aufweist, sodass das Umklappen schnell und präzise möglich ist.
Gemäß einer weiteren Ausgestaltung der Erfindung kann es vorgesehen sein, dass die Abdeckung (Schutzmaske) als Innenlage, soll heißen als die dem Nutzer zugewendete Lage, ein Mesh-Gewebe aufweist. Vorteilhafter Weise kann hierdurch der Atemwiederstand verringert und der Tragekomfort erhöht werden. Das Mesh-Gewebe kann dabei randseitig mit der Außenlage vernäht, verklebt und/oder verschweißt sein, wobei eine Einschuböffnung zur Einbringung der Filterlagen in den sich zwischen Außenlage und Mesh-Gewebe vorgesehen ist. Alternativ kann vorgesehen sein, dass das Mesh-Gewebe mit der Außenlage mittels einer lösbaren Verbindung, wie beispielsweise einem Klettverschluss oder einem Magnetverschluss verbindbar ist, so dass ein Einlegen des Filters möglich ist. Hierzu kann es weiter vorgesehen sein, dass seitens der Außenlage sowie seitens der Mesh-Gewebe Lage jeweils ein vorzugsweise flexibler und/oder dehnbarer Rahmen vorgesehen ist, welcher fest mit der jeweiligen Lage verbunden ist und wobei die Verbindung der Gewebelagen durch eine Verbindung der beiden Rahmen mittels geeigneter lösbarer Verbindungsmittel erfolgt.

Nach einer weiteren Ergänzung kann es vorgesehen sein, dass in die Abdeckung (Schutzmaske) in etwa mittig ein biegsamer Draht oder Bügel, vorzugsweise aus Edelstahl oder Kupfer mit entsprechender Biegsamkeit, eingenäht ist, welcher über eine Naht fixiert wird und somit einen Dichtsitz um die Nase bzw. den Nasenrücken sicherstellt. Gemäß einer weiteren Ausgestaltung der Erfindung kann es vorgesehen sein, dass der biegsame Draht oder Bügel lösbar fixiert ist. Dazu kann es vorgesehen sein, dass eine taschenartige Ausnehmung vorgesehen ist, in welche der biegsame Draht oder Bügel einbringbar respektive einsteckbar ist. Dies erlaubt ein Entfernen des Drahtes oder Bügels zur Reinigung bzw. Desinfizierung der Abdeckung bzw. Schutzmaske.

Um die Dichtigkeit weiter zu verbessern und den Sitz der Abdeckung auf dem Gesicht zu optimieren, kann es vorteilhaft sein, wenn in die Abdeckung mindestens eine Raffung eingearbeitet ist, wodurch Mund und Nase besser und dauerhafter umschlossen werden können.

Am zweckmäßigsten ist es dabei, wenn die Raffung im Bereich der Außenkante der Abdeckung positioniert ist. Vorzugsweise können auf den geschlossenen Seiten der Abdeckung ein bis zwei solcher Raffungen vorzusehen.

Es wurde bereits angesprochen, dass der Sitz der Maske bzw. der Abdeckung bei der Variante der Anordnung des erfindungsgemäßen Filters direkt am Gesicht über eine konkave Anpassung bewerkstelligt wird. Dies wird ermöglicht, jedenfalls vereinfacht, wenn in die Außenlage der Abdeckung Markierungen eingearbeitet sind, welche bezüglich Position und Länge eine Schnittlinie vorgeben. In Abständen von ca. 3 mm können dazu entsprechende Markierungen vorgesehen sein.

In einem zweiten Schritt kann vorgesehen sein, dass die Abdeckung eine Mehrzahl von das Einklappen der Abdeckung erleichternden Einschnitten aufweist. In den bereits markierten Abständen wird die Abdeckung dazu eingeschnitten und im Bereich der markierten Fläche eingeklappt. Dadurch entsteht die bereits angesprochene konkave Form, die einen dichten Nasen- und Mundschutz am Gesicht gewährleistet. Alle offenen Kanten können mit Passpelband zusätzlich zugenäht werden.

Eine weitere Ausführungsform der Erfindung sieht vor, dass die Schutzmaske mindestens ein Band zum Fixieren der Schutzmaske am Kopf des Benutzers vorsieht. Vorzugsweise können dabei elastische Bänder, Schnürrbänder, Klettbänder oder anderweitig verkürzbare Bänder vorgesehen sein. Gedacht zum Beispiel ist an Gummibänder, die um die Ohren gespannt werden und die gleichzeitig den hohen Temperaturen beim Waschen der erfindungsgemäßen Filter Stand halten müssen.

Gegebenenfalls sind auch Ösen in die Abdeckung bzw. die Schutzmaske integriert, um die das Band zum Fixieren, wie z.B. die Gummibänder, in diesem Fall auch demontieren und wiederverwenden zu können, sofern ein mehrmaliger Einsatz nach Reinigung gewünscht respektive möglich ist. Auch der Einsatz eines Knopflochbandes ist denkbar. Grundsätzlich verhält es sich also dabei so, dass das Band vorzugsweise lösbar mit der Abdeckung verbunden ist, um diese genannten Ziele erreichen zu können. Gemäß einer weiteren Ausgestaltung kann es vorgesehen sein, dass die Abdeckung bzw. Schutzmaske in der Außenlage durch Umklappen und vernähen der seitlichen Ränder jeweils am rechten und linken Rand einen Tunnelzug ausbildet, durch welchen Bänder zum Fixieren der Schutzmaske geführt werden können. Dabei kann es auch vorgesehen sein, dass Hülsen in die sich ausbildenden Tunnelzüge eingearbeitet werden, durch welchen die Tunnelzüge stabilisiert werden können. Die Hülsen können dabei rigide oder biegsam ausgestaltet sein. Durch diese Ausgestaltung kann insbesondere ein Zusammenziehen der Tunnelzüge vermieden oder zumindest verringert werden, was einen verbesserten Sitz der Schutzmaske bzw. Abdeckung über dem Gesicht fördern kann.

Ebenfalls bereits angesprochen wurde die Vernähung zwischen Außenlagen und Filterschichten. Mit Blick auf die taschenartige Ausbildung solch einer Vorrichtung empfiehlt es sich, wenn die Lagen dreiseitig unter Verbleib einer entsprechend großen Öffnung für die Zugänglichkeit der inneren Schichten vernäht sind. Alternativ kann es vorgesehen sein, dass die Lage vierseitig vernäht ist und innerhalb der Lagenfläche eine Ausnehmung aufweist, durch welche ein Filter bzw. eine kaskadierte Filterlage in die taschenartige Ausbildung einlegen lässt. Dabei kann es vorgesehen sein, dass die Ausnehmung den überwiegenden Flächenanteil der entsprechenden Lage ausbildet und eine taschenartige Ausbildung sich lediglich im Randbereich einstellt. Die Lage bildet insoweit einen taschenartigen Rahmen aus. Vorzugsweise ist die Ausnehmung dabei einerseits so groß gestaltete, dass eine gute und einfache Austauschbarkeit des Filters gewährleistet ist, andererseits der taschenartige Randbereich so groß gestaltet, dass ein sicherer Sitz des Filters in der taschenartigen Ausbildung sichergestellt ist. Durch eine maximal große Ausbildung der Ausnehmung kann der Atemwiderstand durch die Maske vorteilhafter Weise reduziert werden. Weiterhin kann vorgesehen sein, dass der sich ausbildende Rahmen nicht allseits mit einer Außenlage vernäht ist, insbesondere dass er nur an drei Seiten vernäht ist. Hierdurch bildet sich ein Einschub aus, durch welchen das Filter in den die rahmenartige Ausnehmung eingeschoben werden kann. Dabei kann es gemäß einer weiteren Ausgestaltung der Erfindung vorgesehen sein, dass die rahmenartige Ausnehmung zur Aufnahme des Filters auch die zuvor bereits beschriebene taschenartige Ausnehmung zur Aufnahme eines biegsamen Drahtes oder Bügels umfasst.

Gemäß einer weiteren Ausgestaltung der Erfindung kann es vorgesehen sein, dass die rahmenartige Ausnehmung bzw. der sich durch diese bildende Rahmen zumindest teilweise auf der dem Gesicht des Nutzers zugewandten Seite gummiert ist. Vorzugsweise ist der Rahmen zumindest im oberen, den Nasenrücken und die Wangen des Nutzers bedeckenden Bereich gummiert. Insbesondere kann es vorgesehen sein, dass der Rahmen umlaufend gummiert ist. Unter Gummierung wird dabei im Sinne der Erfindung verstanden, dass der der Rahmen aus seinem elastisch komprimierbaren Material besteht oder eine Schicht eines solchen Materials aufweist. Eine Gummierung kann dabei beispielsweise aus einem elastischen Schaumstoff, einem Moosgummi oder der gleichen gebildet sein.

Gemäß einer weiteren Ausgestaltung der Erfindung kann es vorgesehen sein, dass zur Herstellung einer taschenartigen Ausbildung zwei Teillagen derart zueinander überlappend gelegt und miteinander vernäht werden, dass sich ein Eingriff ausbildet, durch welchen hindurch ein Zugang zu der taschenartigen Ausbildung gewährleistet ist.

Eine noch bessere Anpassung an das menschliche Gesicht ist möglich, wenn die Abdeckung Ausnehmungen für die Ohren aufweist. Damit wird ein noch engerer Sitz realisiert.

Zur Vereinfachung des Ausatmens schlägt die Erfindung vor, dass in die Schutzmaske ein Auslassventil integriert ist, das durch Aufschieben, Verrasten etc. mit der eigentlichen Schutzmaske bzw. dem Gestell verbunden ist.

Die handhabungsgemäße Maske wird zusätzlich vereinfacht, wenn die Außenlagen wie zuvor beschrieben ein Einsetzen und/oder Entnehmen der Filtervliese erleichternde Aussparungen aufweist. Solch eine Aussparung erlaubt das Greifen des Innenlebens der Abdeckung zweckmäßigerweise mit zwei Fingern.

Die Erfindung zeichnet sich insbesondere dadurch aus, dass eine Schutzmaske für den primären Zweck, die Verbreitung ansteckender Krankheiten durch Tröpfchen- oder andere Infektionen zu verhindern. Dazu umfasst die erfindungsgemäße Schutzmaske eine Außenlage, die zugleich atmungsaktiv und robust ist und über geringen Atemwiderstand verfügt und dabei die zusätzliche Funktion einer Art Tasche für die wichtigen Filterschichten übernimmt. Darunter sind die kaskadierenden Lagen von Filtervlies zu verstehen. Die Erfindung lehrt insbesondere zwei Varianten mit einer zumindest teilweisen Abdeckung für das menschliche Gesicht und der Anpassung des Filters durch eine konkave Formgebung sowie einer Ausbildung der Schutzmaske als Gestell, das lösbar mit dem Filter jeweils verbunden wird. Durch diese Kaskadierung wird eine progressive Filterleistung in Richtung der Reinluft, in der Höhe entsprechend dem jeweiligen Einsatzgebiet, erzielt. Verwendet werden Materialien, welche im Speziellen einen Strukturaufbau besitzen. Die Materialien weisen bei der Herstellung eine stark in sich verwobene Struktur, wie z.B. ein Wirrgelege, auf, wodurch Partikel in Bereichen von 10 bis 0,1 µm zuverlässig und sicher aufgefangen werden.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
Figur leine Explosionsdarstellung des Filters,
Figur 2 die taschenartige Struktur des Filters,
Figur 3 einen Filteraufbau,
Figur 4 ein Filter mit Raffungen,
Figur 5E inschnürungen,
Figur 6 ein Filter mit Befestigungsband,
Figur 7 eine Variante zu Figur 6,
Figur 8 ein Filter mit Ausnehmung,
Figur 9 eine Variante zu Figur 7,
Figur 10 ein Filter mit Aussparung,
Figur 11 ein Filter mit Fixierung,
Figur 12 ein Filter mit Ventil,
Figur 13 ein Filter mit Einschnürungen,
Figur 14 ein Filter mit Gestell,
Figur 15 ein Filter mit Gestell und
Figur 16 den Filter nach Figur 15 in Seitenansicht
Figur 17 eine Ansicht der Innenseite einer Ausgestaltung einer Schutzmaske mit Ausnehmung zur Aufnahme eines kaskadierten Filters.

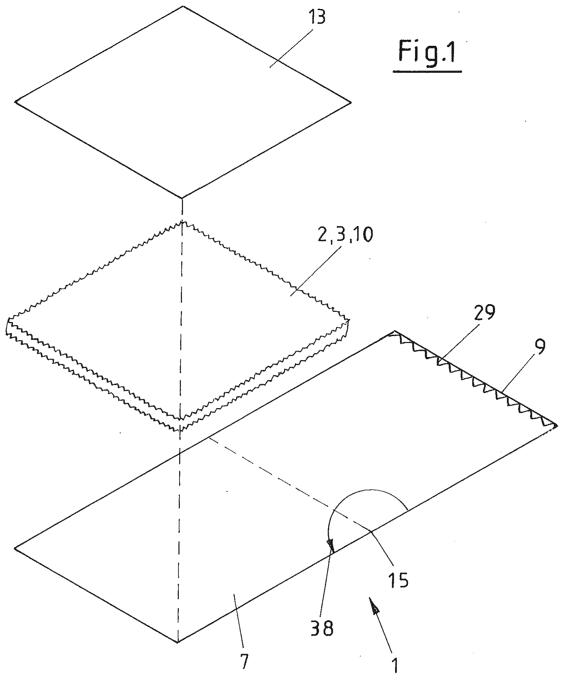

Figur 1 zeigt eine Schutzmaske 1 für den beispielhaften Gebrauch zur Verhinderung der Verbreitung ansteckender Krankheiten durch Tröpfchen- oder andere Infektionen. Die Schutzmaske 1 verfügt über ein mehrlagiges Filter 2 mit einem Filtervlies 3 in der Mitte. Solch ein Vlies 3 ist zentraler Gegenstand eines wiederaufbereitbaren Atemschutzes bzw. Schutzes für Mund oder Nase. Durch verschiedene austauschbare Hochleistungsfilter werden benötigte Leistungsstufen durch einschlägige Kombinationen erreicht. Eine Zwischenlage ist mit 13 und eine Außenlage mit 7 bezeichnet. Gut zu erkennen ist hier, dass die Außenlage 7 in etwa doppelt so groß dimensioniert ist wie Zwischenlage 13 oder Filtervlies 3, um, symbolisiert durch den Pfeil 38, eine Tasche um das Filtervlies 3 zu schaffen. Dazu werden dann Außenlage 7, Zwischenlage 13 und Filtervlies 3 an ihren Außenseiten unter Belassung eines Einschubfaches miteinander vernäht. Siehe Naht 29 an der Außenkante 9 etc.

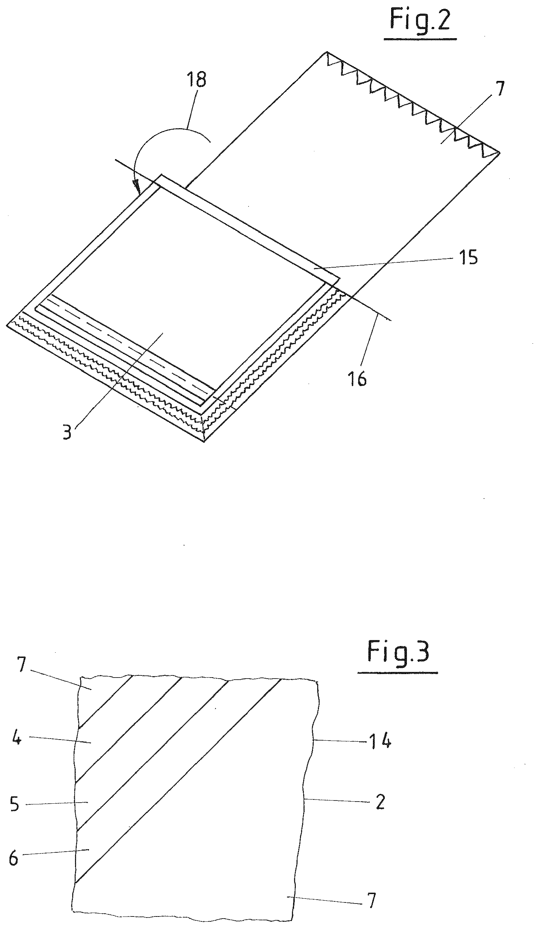

Das in Figur 1 oder 2 gezeigte Filtervlies 3 ist als Ab- oder Überdeckung ausgebildet, um sich den Konturen des menschlichen Gesichts anpassen zu können. Dies ist zusätzlich veranschaulicht in Figur 2 mit dem Filtervlies 3 in teilweise eingeklapptem Zustand. Mit 15 ist eine Falzkante bezeichnet. Alle Schichten/Lagen werden übereinandergelegt und an drei Seiten abgenäht. Vorher wird ein Biegedraht eingelegt, der mit 16 angedeutet ist, der in das Vlies 3 eingearbeitet werden soll, um den dichten Sitz an Nase oder Mund sicherzustellen.

Figur 3 verdeutlicht den Aufbau der Schichten bzw. Lagen mit der Außenlage 7 oben und unten nach dem Zusammenklappen der Außenlage 7 zu einer Tasche 14 um die Filterlagen bzw. -schichten 4, 5, 6.

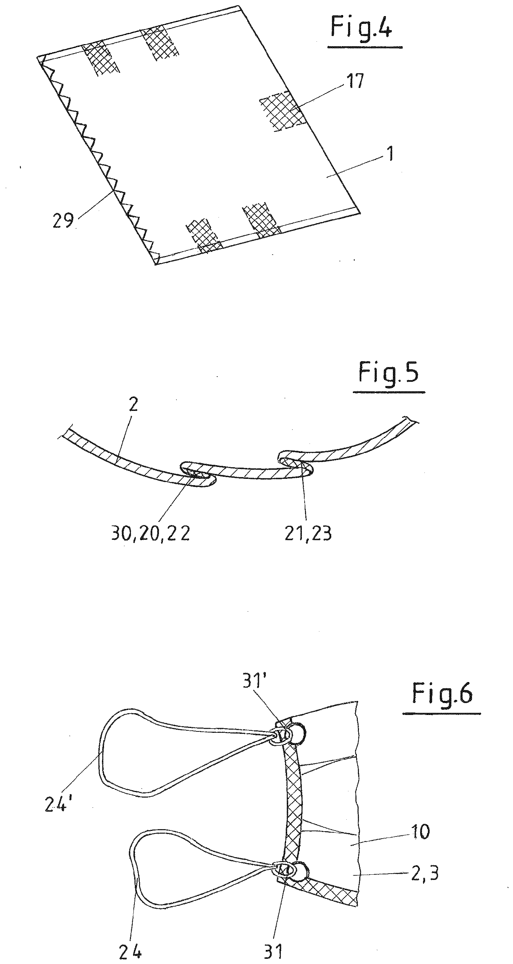

Der Schwerpunkt der Darstellung gemäß Figur 4 liegt auf den Raffungen 17 mit der Option, z. B. im Kinnbereich eine Stoffraffung einzunähen, um erhöhte Dichtigkeit zu erwirken.

Figur 5 veranschaulicht in vorgegebenen Abständen von ca. 3 mm vorgesehene Markierungen 20, 21 für Einschnitte 22, 23. An den markierten Stellen können die Einschneidungen vorgenommen werden. Dank der Überlappungen 30 bildet sich dann eine konkave Form aus, welche den Dichtsitz zusätzlich verbessert.

Figur 6 veranschaulich ein Beispiel für eine lösbare Verbindung durch das Verbindungsmittel 31, 31' zwischen Band 24 und Abdeckung 10.

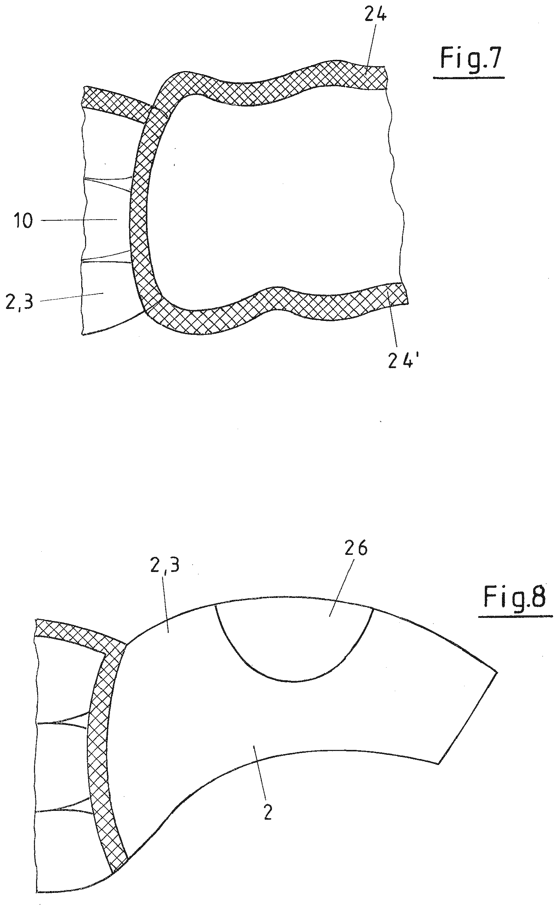

Eine Variante für angenähte Bänder 24 an Vlies 3 bzw. Filter 2 zeigt Figur 7. Denkbar ist hier der Einsatz angenähter Bänder, die um den Kopf geknotet werden.

Ergänzend bezieht sich Figur 8 auf einen Filter 2 mit einer optionalen Aussparung 28 für das menschliche Ohr. Optional ist auch ein überlappendes Klettband im Nacken bzw. ein Stretchband mit definiertem Zug möglich.

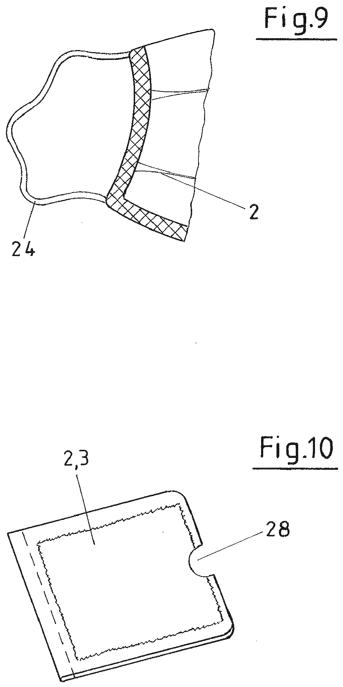

Es empfiehlt sich gemäß Figur 9 Gummi- oder andere flexible Bänder 24 um die Ohren zu ziehen, die dann auch bei hohen Temperaturen beim Waschen genügen müssen.

Hierzu zeigt Figur 10 eine Einschubhilfe zur Applikation des Filters, um ein korrektes Einlegen des Vlieses zu gewährleisten. Daher die halbrunde Aussparung 28, um den Filter 2 bzw. das Vlies nach Einführen des Filters an dem vorgesehenen Ort sicher einsetzen, halten entnehmen zu können.

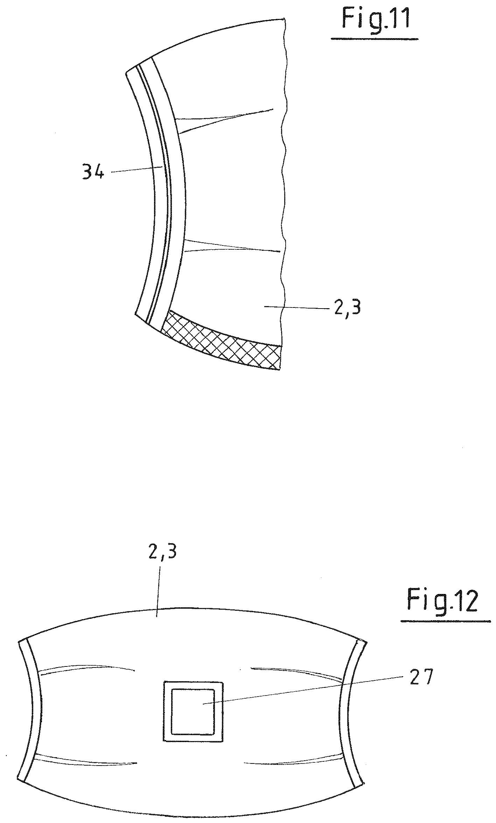

Figur 11 zeigt ein Filtervlies 3 mit einer Vorrichtung zum Lösen der Bänder mittels einer Schiene 34 für einen entsprechenden Verstellmechanismus zum Aufschieben der Kopffixierungen und zum schnellen Wechseln des Systems, respektive seiner Komponenten.

Die Figur 12 veranschaulicht ein Ventil 27, das in das Filter 2 integriert ist, um den Prozess des Ausatmens zu erleichtern.

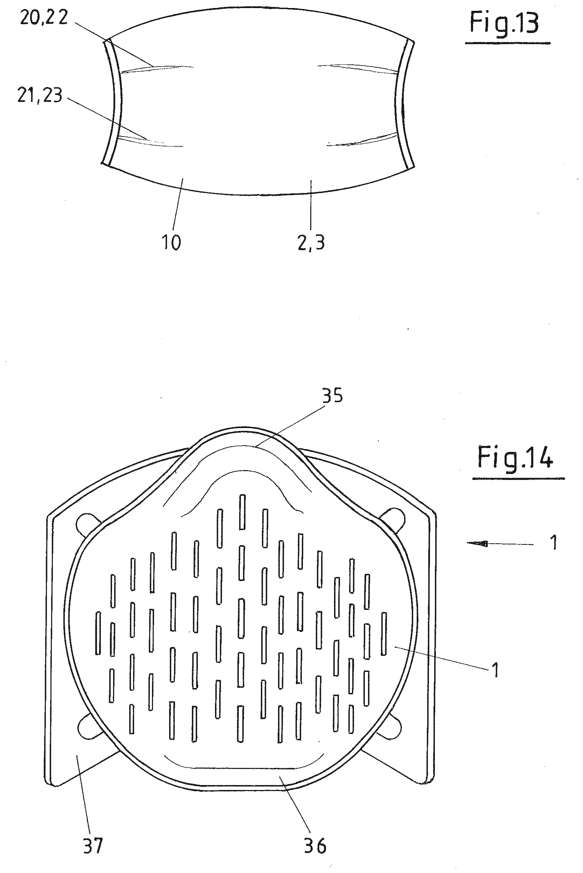

Schwerpunkt der Darstellung nach Figur 13 sind wiederum die Markierungen 20, 21 für die Einschnitte 22, 23, um die konkave Anpassung, die in Figur 13 gut verdeutlicht ist, der Abdeckung 10 an das menschliche Gesicht zu realisieren.

Figur 14 zeigt eine Maske 1 aus einem starren oder flexiblen Kunststoff als Filterträger mit einer Filteraufnahme 37 und einem Gestell 12, umfassend auch einen Umschluss 35 für die Nase und einen Umschluss 36 für das Kinn. Solch eine Vorrichtung ermöglicht die lösbare Verbindung der Maske 1 bzw. des Gestells 12 über Steck-, Einschieb- oder Rastsysteme, Magnete, Druckknöpfe, Kunststoffschienen, Klettverschlüsse etc. zur Befestigung des Einsatzes 19 in der Maske 1 bzw. dem Gestell 12 vor dem menschlichen Gesicht 11.

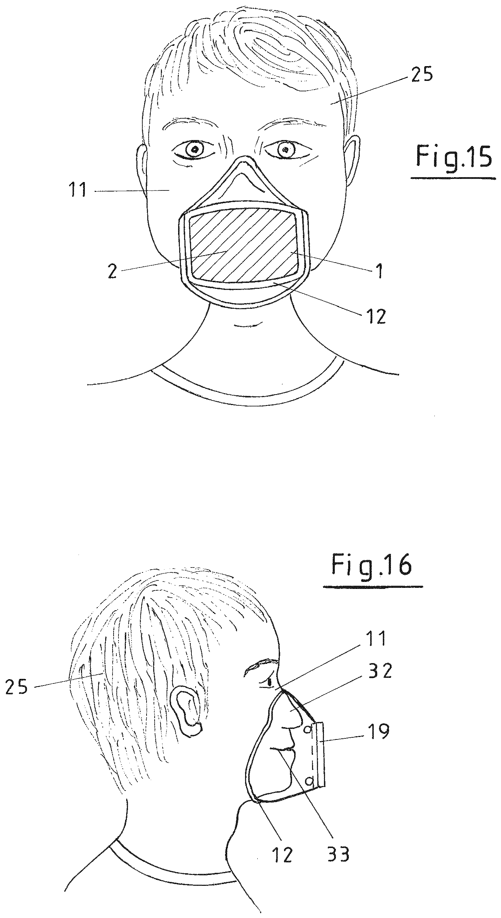

Die Figuren 15 und 16 zeigen die Variante der Erfindung mit dem Gestell 12 als Filter 2 mit der Möglichkeit, einen Einsatz 19 in oder an dem Gestell 12 in geeigneter Weise fixieren zu können. Die ggf. zusätzliche Befestigung am Kopf 25 ist hier nicht gezeigt. Gut zu erkennen ist der Schutz für Mund 33 und Nase 32.

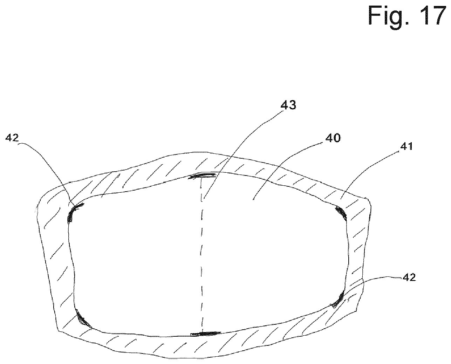

Figur 17 eine Ansicht der Innenseite einer Ausgestaltung einer Schutzmaske mit Ausnehmung 40 zur Aufnahme eines kaskadierten Filters. Eine Innenlage ist dabei vierseitig vernäht und weist innerhalb der Lagenfläche eine Ausnehmung 40 auf, durch welche ein Filter bzw. eine kaskadierte Filterlage in die taschenartige Ausbildung einlegen lässt. Dabei kann es vorgesehen sein, dass die Ausnehmung 40 den überwiegenden Flächenanteil der entsprechenden Lage ausbildet und eine taschenartige Ausbildung sich lediglich im Randbereich einstellt. Die Lage bildet insoweit einen taschenartigen Rahmen 41 aus. Vorzugsweise ist die Ausnehmung 40 dabei einerseits so groß gestaltete, dass eine gute und einfache Austauschbarkeit des Filters gewährleistet ist, andererseits der taschenartige Randbereich 41 so groß gestaltet, dass ein sicherer Sitz des Filters in der taschenartigen Ausbildung sichergestellt ist. Durch eine maximal große Ausbildung der Ausnehmung kann der Atemwiderstand durch die Maske vorteilhafter Weise reduziert werden. Gemäß einer weiteren Ausgestaltung kann es dabei vorgesehen sein, dass der taschenartigen Rahmen 41 Verstärkungselemente 42 aufweist, mittels welcher der Rahmen 41 in seiner Form stabilisiert wird. Vorzugsweise sind solche Verstärkungselemente 42 zumindest in den vier Eckbereichen vorgesehen. Ergänzend hierzu können noch Verstärkungselemente an den Schnittpunkten der Mittellinie 43 mit dem Rahmen 41 vorgesehen sein. Die Verstärkungselemente 42 können als verstärkte Naht, Paspelierung oder als in eine Naht eingefasstes oder eingeklebtes Element aus Kunststoff oder Metall ausgestaltet sein

## Patentansprüche

1. Schutzmaske (1), insbesondere Schutzmaske (1) zur Verhinderung der Verbreitung ansteckender Krankheiten durch Tröpfchen- und auf anderen Wegen übertragbare Infektionen, mit einem mehrlagigen Filter (2),
**dadurch gekennzeichnet,**
**dass** das Filter (2) eine Außenlage (7) und ein Filtervlies (3) mit kaskadierenden Lagen (4, 5, 6) aufweist.

2. Schutzmaske nach Anspruch 1,
**dadurch gekennzeichnet,**
**dass** das Filter (2) als zumindest teilweise Abdeckung (10) für das menschliche Gesicht (11) ausgebildet ist.

3. Schutzmaske nach Anspruch 1,
**dadurch gekennzeichnet,**
**dass** die Schutzmaske (1) als Gestell (12) zur Aufnahme eins Filters (2) ausgebildet ist.

4. Schutzmaske nach Anspruch 1,
**dadurch gekennzeichnet,**
**dass** die äußere Lage (4) Filtervlies (4) eine Filtergrößenfraktion zwischen 45% und 95%, vorzugsweise zwischen 48% und 93% bei Partikelgrößen > 10 µm aufweist.

5. Schutzmaske nach Anspruch 1,
**dadurch gekennzeichnet,**
**dass** ein mittleres Filtervlies (5) eine Filtergrößenfraktion zwischen 30% und 80%, vorzugsweise zwischen 35% und 75% bei Partikelgrößen > 2,5 µm aufweist.

6. Schutzmaske nach Anspruch 1,
**dadurch gekennzeichnet,**
**dass** das innere Filtervlies (6) eine Filtergrößenfraktion zwischen 40% und 90%, vorzugsweise zwischen 50% und 80% bei > 1,0 µm aufweist.

7. Schutzmaske nach Anspruch 1,
**dadurch gekennzeichnet,**
**dass** die Abdeckung (10) eine Zwischenlage (13) umfasst, welche zwischen Filtervlies (3) und Außenlage (7) vorgesehen ist.

8. Schutzmaske nach Anspruch 1,
**dadurch gekennzeichnet,**
**dass** die Außenlage (7) eine Tasche (14) für Filtervlies und/oder Zwischenlage (13) ausbildet

9. Schutzmaske nach Anspruch 1,
**dadurch gekennzeichnet,**
**dass** in die Abdeckung (10) in etwa mittig ein biegsamer Draht (16) lösbar eingenäht ist.

10. Schutzmaske nach Anspruch 1,
**dadurch gekennzeichnet,**
**dass** die Schutzmaske (1) mindestens ein Band (24) zum Fixieren der Schutzmaske (1) am Kopf (25) des Benutzers vorsieht.

11. Schutzmaske nach Anspruch 10,
**dadurch gekennzeichnet,**
**dass** das Band (24) lösbar mit der Abdeckung (10) verbunden ist.

12. Schutzmaske nach einem der vorhergehenden Ansprüche, **dadurch gekennzeichnet,**
**dass** die Lagen (4, 5, 6) dreiseitig vernäht sind.

13. Schutzmaske nach Anspruch 1,
**dadurch gekennzeichnet,**
**dass** die Abdeckung (10) Ausnehmungen (26) für die Ohren aufweist.

14. Schutzmaske nach Anspruch 1,
**dadurch gekennzeichnet,**
**dass** in die Schutzmaske (1) ein Auslassventil (27) integriert ist.

15. Schutzmaske nach Anspruch 1,
**dadurch gekennzeichnet,**
**dass** die Außenlagen (17) ein Einsetzen und/oder Entnehmen der Filtervliese (3) erleichternde Aussparungen (28) aufweist.
